# EUROPEAN PATENT APPLICATION

(11) **EP 4 804 026 A1**
(43) Date of publication of application: **09.09.2026**
(21) Application number: 24896409.0
(22) Date of filing: 21.11.2024
(51) Int. Cl.: G06F 9/50

(54) **TASK DEPLOYMENT METHOD AND TASK DEPLOYMENT APPARATUS**

(30) Priority: 27.11.2023 CN 202311609712
(71) Applicant: Huawei Technologies Co., Ltd., Shenzhen, Guangdong 518129 (CN)
(72) Inventor: SUN, Chumin, Shenzhen, Guangdong 518129 (CN); WANG, Tianqi, Shenzhen, Guangdong 518129 (CN); WANG, Yao, Shenzhen, Guangdong 518129 (CN); ZHOU, Li, Shenzhen, Guangdong 518129 (CN); LYU, Cheng, Shenzhen, Guangdong 518129 (CN); SUN, Jie, Shenzhen, Guangdong 518129 (CN); YUNG, Manhong, Shenzhen, Guangdong 518129 (CN)
(74) Representative: Pfenning, Meinig & Partner mbB
(86) International application number: PCT/CN2024/133597
(87) International publication number: WO 2025/113318

(57) **Abstract**

A task deployment method and a task deployment apparatus are provided. The method includes: determining a to-be-deployed computational graph; and allocating a plurality of compute tasks in the computational graph to a plurality of compute units based on computational powers of the plurality of compute units corresponding to the computational graph, where computational powers of at least two of the plurality of compute units are different. In addition, a difference between a ratio of computational power loads of the plurality of compute units and a ratio of the computational powers of the plurality of compute units is equal to 0 or less than a first threshold, and a computational power load of each compute unit is determined based on a sum of computational powers required for compute tasks corresponding to the compute unit. In this solution, compute tasks are allocated based on computational powers of compute units, so that a sum of computational powers required for compute tasks executed by the compute unit matches a computational power of the compute unit. This can balance loads between the plurality of compute units, to improve overall computation efficiency.

## Description

This application claims priority to Chinese Patent Application No. 202311609712.9, filed with the China National Intellectual Property Administration on November 27, 2023 and entitled "TASK DEPLOYMENT METHOD AND TASK DEPLOYMENT APPARATUS", which is incorporated herein by reference in its entirety.

### TECHNICAL FIELD

This application relates to the field of computer technologies, and in particular, to a task deployment method and a task deployment apparatus.

### BACKGROUND

Currently, computational power requirements for compute systems are increasing, and compute tasks need to be deployed on the compute systems for a large quantity of existing and emerging services.

In a related technology, compute tasks are usually equally deployed to various compute units based on a quantity of compute units in the compute system. That is, in a single deployment, quantities of compute tasks processed by all compute units are equal or approximately equal. Using processors as an example of compute units, if a server includes three processors, specifically, a computational graph containing a plurality of compute tasks is equally partitioned into three subsets, and compute tasks in each subset are equal or approximately equal, and then the three processors execute compute tasks in the three subsets respectively. Because processing capabilities of a plurality of compute units may be different, this deployment solution of equally partitioning the computational graph based on the quantity of compute units may cause load imbalance between the compute units, prolonging overall service computation time and affecting overall computation efficiency.

### SUMMARY

This application provides a task deployment method and a task deployment apparatus, so that compute tasks are deployed based on computational powers of compute units, to balance loads between compute units and improve overall computation efficiency.

According to a first aspect, this application provides a task deployment method. The method includes: determining a to-be-deployed computational graph, where the computational graph includes a plurality of compute tasks; and allocating the plurality of compute tasks to a plurality of compute units based on computational powers of the plurality of compute units corresponding to the computational graph, where computational powers of at least two of the plurality of compute units are different, a difference between a ratio of computational power loads of the plurality of compute units and a ratio of the computational powers of the plurality of compute units is equal to 0 or less than a first threshold, and a computational power load of each compute unit is determined based on a sum of computational powers required for compute tasks corresponding to each compute unit.

In the foregoing solution, compute tasks are allocated based on computational powers of compute units, so that a sum of computational powers required for compute tasks executed by the compute unit matches a computational power of the compute unit. This can balance loads between the plurality of compute units, to improve overall computation efficiency.

In a possible implementation of the first aspect, the allocating the plurality of compute tasks to the plurality of compute units based on the computational powers of the plurality of compute units includes: determining a partition quantity N for the computational graph based on the computational powers of the plurality of compute units; partitioning the computational graph into N subsets based on N, where each of the N subsets includes one or more of the plurality of compute tasks, a difference between computational powers required for any two of the N subsets is equal to 0 or less than a second threshold, and a computational power required for each subset is a sum of computational powers required for compute tasks in each subset; and allocating the N subsets to the plurality of compute units based on the ratio of the computational powers of the plurality of compute units.

In the foregoing solution, a concept of a meta computational power is introduced, and the computational graph is equally partitioned into the N subsets based on a total quantity N of meta computational powers of a plurality of processors and the computational powers. Then, the subsets are allocated based on the ratio of the computational powers of the plurality of compute units, so that the compute tasks can be equally allocated to the compute units, to achieve load balance.

In a possible implementation of the first aspect, the determining the partition quantity N for the computational graph based on the computational powers of the plurality of compute units includes: determining a meta computational power based on a common divisor of the computational powers of the plurality of compute units, where the meta computational power represents a unit computational power of the plurality of compute units; computing quotients of the computational powers of the plurality of compute units and the meta computational power to obtain quantities of meta computational powers of the plurality of compute units; and computing a sum of the quantities of meta computational powers of the plurality of compute units to obtain N.

In a possible implementation of the first aspect, before the determining the meta computational powers based on the common divisor of the computational powers of the plurality of compute units, the method further includes: updating the computational powers of the plurality of compute units based on time for executing a same compute task by the plurality of compute units.

In a possible implementation of the first aspect, the partitioning the computational graph into the N subsets based on N includes: partitioning the computational graph with an objective of minimizing a data transmission amount of a subset, to obtain the N subsets, where the data transmission amount of the subset is a sum of data transmission amounts of compute tasks in the subset.

In a possible implementation of the first aspect, before the allocating the plurality of compute tasks to the plurality of compute units based on the computational powers of the plurality of compute units, the method further includes: removing a target compute task from the plurality of compute tasks, where the target compute task includes a predetermined task to be executed by each compute unit.

In a possible implementation of the first aspect, the compute unit includes a server, a processor unit in the server, a processor in the server, or a core in the processor.

According to a second aspect, this application further provides a task deployment apparatus. The apparatus includes an analysis module and a deployment module.

The analysis module is configured to determine a to-be-deployed computational graph and computational powers of a plurality of compute units corresponding to the computational graph, where the computational graph includes a plurality of compute tasks.

The deployment module is configured to allocate the plurality of compute tasks to a plurality of compute units based on computational powers of the plurality of compute units corresponding to the computational graph, where computational powers of at least two of the plurality of compute units are different, a difference between a ratio of computational power loads of the plurality of compute units and a ratio of the computational powers of the plurality of compute units is equal to 0 or less than a first threshold, and a computational power load of each compute unit is determined based on a sum of computational powers required for compute tasks corresponding to the compute unit.

In a possible implementation of the second aspect, the deployment module is specifically configured to determine a partition quantity N for the computational graph based on the computational powers of the plurality of compute units; partition the computational graph into N subsets based on N, where each of the N subsets includes one or more of the plurality of compute tasks, a difference between computational powers required for any two of the N subsets is equal to 0 or less than a second threshold, and a computational power required for each subset is a sum of computational powers required for compute tasks in the subset; and allocate the N subsets to the plurality of compute units.

In a possible implementation of the second aspect, the deployment module is specifically configured to determine a meta computational power based on a common divisor of the computational powers of the plurality of compute units, where the meta computational power represents a unit computational power of the plurality of compute units; compute quotients of the computational powers of the plurality of compute units and the meta computational power to obtain quantities of meta computational powers of the plurality of compute units; and compute a sum of the quantities of meta computational powers of the plurality of compute units to obtain N.

In a possible implementation of the second aspect, the deployment module is specifically configured to: before determining the meta computational power based on the common divisor of the computational powers of the plurality of compute units, update the computational powers of the plurality of compute units based on time for executing a same compute task by the plurality of compute units.

In a possible implementation of the second aspect, the deployment module is specifically configured to partition the computational graph with an objective of minimizing a data transmission amount of a subset, to obtain the N subsets, where the data transmission amount of the subset is a sum of data transmission amounts of compute tasks in the subset.

In a possible implementation of the second aspect, the deployment module is specifically configured to: before allocating the plurality of compute tasks to the plurality of compute units based on the computational powers of the plurality of compute units, remove a target compute task from the plurality of compute tasks, where the target compute task includes a predetermined task to be executed by each compute unit.

In a possible implementation of the second aspect, the compute unit includes a server, a processor unit in the server, a processor in the server, or a core in the processor.

According to a third aspect, this application further provides a compute device. The compute device includes a processor and a memory. The processor is configured to execute a computer program stored in the memory, to implement the task deployment method provided in any one of the first aspect or the possible implementations of the first aspect.

According to a fourth aspect, this application further provides a computer-readable storage medium. The computer-readable storage medium stores instructions, and when the instructions are run on a computer, the computer is enabled to implement the task deployment method provided in any one of the first aspect or the possible implementations of the first aspect.

According to a fifth aspect, this application further provides a computer program product including instructions. When the computer program product runs on a computer, the computer is enabled to implement the task deployment method provided in any one of the first aspect or the possible implementations of the first aspect.

Any apparatus, computer storage medium, or computer program product provided above is configured to perform the method provided above. Therefore, for beneficial effects that can be achieved by the apparatus, the computer storage medium, or the computer program product, refer to the beneficial effects of the corresponding solution in the corresponding method provided above. Details are not described herein again.

### BRIEF DESCRIPTION OF DRAWINGS

FIG. 1 is a flowchart of a task deployment method according to an embodiment of this application;
FIG. 2 is a detailed diagram of the task deployment method shown in FIG. 1 according to an embodiment of this application;
FIG. 3a is a diagram of performing task deployment on a central processing unit CPU and a graphics processing unit GPU according to an embodiment of this application;
FIG. 3b is a diagram of a computational graph according to an embodiment of this application;
FIG. 3c is a diagram of a sequence obtained through pre-scheduling in which compute units execute compute tasks according to an embodiment of this application;
FIG. 4 is a flowchart of a hierarchical deployment method based on the method shown in FIG. 1 according to an embodiment of this application;
FIG. 5 is a diagram of performing task deployment on a central processing unit CPU and a graphics processing unit NPU according to an embodiment of this application;
FIG. 6 is a diagram of a structure of a task deployment apparatus according to an embodiment of this application; and
FIG. 7 is a diagram of a structure of a compute device according to an embodiment of this application.

### DESCRIPTION OF EMBODIMENTS

To make objectives, technical solutions, and advantages of embodiments of this application clearer, the following describes the technical solutions in embodiments of this application with reference to accompanying drawings.

Before embodiments of this application are described, the following first describes nouns appearing in embodiments of this application.

A compute unit is a component that executes a specific compute task in a compute system. Computation may specifically include a compute device, a processor unit, a processor, or a core in the processor based on a level of the compute unit in the compute system. The processor unit may be determined based on a memory area accessed by the processor. Processors accessing a same memory area are one processor unit, and one processor unit may include one or more processors. It may be understood that the compute system usually includes a plurality of compute units. The compute system may be specifically a distributed compute cluster including a plurality of compute devices, or a compute device including a plurality of processors. The compute device may include a server and a terminal device, and the terminal device may include a notebook computer, a smartphone, and the like.

The processor of the compute device may include a plurality of homogeneous processors or a plurality of heterogeneous processors, and each processor includes at least one core. The processor may specifically include a central processing unit (central processing unit, CPU), a graphics processing unit (graphics processing unit, GPU), and a neural network processing unit (neural network processing unit, NPU). It may be understood that homogeneous and heterogeneous mean that structures of processors are the same or different. For example, any two of the CPU, the GPU, and the NPU are heterogeneous processors, a plurality of CPUs with different structures, a plurality of GPUs with different structures, or a plurality of NPUs with different structures also are heterogeneous processors, and a plurality of CPUs with a same structure, a plurality of GPUs with a same structure, or a plurality of NPUs with a same structure are homogeneous processors.

A computational power means a computational power of the compute unit. The computational power may be represented by floating-point operations per second (floating-point operations per second, FLOPS or FP), and may be specifically measured at a granularity of 6 mega floating-point operations per second MFP, 1 giga floating-point operations per second GFP, or 1 tera floating-point operations per second TFP.

A meta computational power may represent a unit computational power of the compute unit. A quantity of meta computational powers may measure the computational power of the compute unit.

Task deployment means a process of allocating a compute task, that is, a process of determining a compute unit that executes the compute task. After the task deployment, the compute task is scheduled to the corresponding compute unit for computation based on a deployment result.

A computational graph is a directed acyclic graph used to describe mathematical computation, and includes a plurality of nodes and edges connecting the nodes. The node represents a compute task, and the edge connecting two nodes represents that a computation result of a compute task is transferred to another compute task. The computational graph represents a computation and data transfer process by using a series of nodes and edges.

In a related technology, task deployment is to equally partition a computational graph based on a quantity of compute units to obtain subsets whose quantity is equal to the quantity of compute units, where all subsets include equal or approximately equal quantities of compute tasks, and one compute unit executes a compute task in one subset.

For example, a series of objects (compute tasks) are created in deployment software, and information synchronization may be implemented between the objects by sending and receiving messages, to transfer a computing result. After the series of objects are compiled to obtain a computational graph, the computational graph is submitted to a runtime environment of the deployment software. The runtime environment equally partitions the computational graph based on a quantity of processors, to implement task deployment. After the deployment, the runtime environment schedules compute tasks that can be concurrently executed to a plurality of processors for execution, and migrates computation results of the compute tasks between the processors. However, this deployment solution causes severe load imbalance between processors. Due to load imbalance between processors, overall computation efficiency is affected. In addition, migrating computing results between processors causes higher data transfer overheads.

Therefore, embodiments of this application provide a task deployment method, to resolve the foregoing problem.

In the task deployment method provided in embodiments of this application, compute tasks in a computational graph are allocated to various compute units based on computational powers of the compute units, and a difference between a ratio of computational power loads of the compute units and a ratio of the computational powers of the compute units is equal to 0 or less than a first threshold, that is, the ratio of the computational power loads of the compute units is equal to or approximately equal to the ratio of the computational powers of the compute units. In this way, it can be ensured that a computational power load of each compute unit matches a computational power of the compute unit. In this method, task deployment is performed based on the computational power of the compute unit and the computational power required for the compute task. In this way, the computational power loads of the compute units can be balanced, and the compute units can fully utilize their computational powers when executing the corresponding compute tasks, to improve overall computation efficiency. Because the computational power loads of the compute units are balanced, unnecessary data migration between compute units can be reduced, to reduce data transfer overheads.

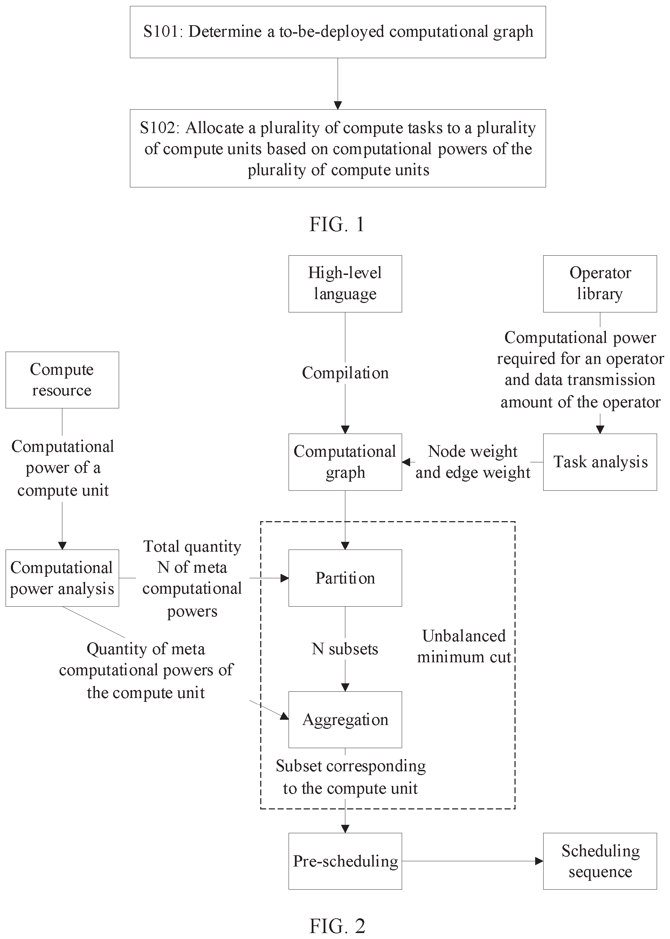

The following uses an example in which the compute unit is a processor to describe in detail the task deployment method provided in embodiments of this application with reference to FIG. 1 and FIG. 2.

FIG. 1 is a flowchart of a task deployment method according to an embodiment of this application. The method may be performed by a task deployment device. The task deployment device may be any compute device on which deployment needs to be performed, for example, a server or a smartphone on which deployment needs to be performed. As shown in FIG. 1, the method includes S101 and S102.

S101: The task deployment device determines a to-be-deployed computational graph.

In this embodiment, as shown in FIG. 2, the task deployment device may process a prewritten high-level computer language by using computational graph generation software, and obtain, through compilation by using function flow run time (function flow run time, FFRT), the computational graph suitable for hardware storage and execution of a compute system. The computational graph includes a plurality of nodes and edges corresponding to the plurality of nodes. The node represents a compute task (also referred to as an operator) in the high-level language, and the edge corresponding to the node represents a data transmission amount of the compute task.

In a process of generating the computational graph, as shown in FIG. 2, a weight of each node and a weight of each edge in the computational graph are determined. The weight of the node is used to reflect a computational power required for a compute task, that is, a computation amount of the compute task. A larger weight of the node indicates a larger computational power required for the compute task. The weight of the edge is used to reflect a data transmission amount of a compute task. A larger weight of the edge indicates a larger data transmission amount.

Performance analysis (Profiling) is performed on the compute task represented by each node to obtain an operator library. The operator library includes an actual measured computational power value required for each compute task and an actual measured data transmission amount value of each compute task.

For the weight of the node, the weight of the node may be obtained based on an actual measured computational power value and a theoretical computational power value of the compute task represented by each node in the operator library according to the following formula (1): $w_node \left(i\right) = Scale \left[Profiling\left(i\right)\cdot Analysis\left(i\right)\right]$

In the foregoing formula (1), w_node(i) represents a weight of an i^{th} node in the computational graph, Profiling(i) represents an actual measured computational power value of a compute task represented by the i^{th} node, and Analysis(i) represents a theoretical computational power value of the compute task represented by the i^{th} node. A Scale function is a function for standardizing data, and the Scale function standardizes Profiling(i)•Analysis(i), so that the weight of the node i may be obtained.

For the weight of the edge corresponding to the node, the weight of the edge corresponding to the node may also be obtained based on an actual measured data transmission amount value and a theoretical data transmission amount value of the compute task represented by each node in the operator library according to the following formula (2): $w_link \left(i\to j\right) = Profiling \left(i\to j\right) ⋅ Analysis \left(i\to j\right) / EdgeSlack \left(i\to j\right)$

In the foregoing formula (2), w_link(i→j) represents a weight of an edge between the i^{th} node and a j^{th} node in the computational graph, Profiling(i→j) represents an actual measured data transmission amount value between the compute task represented by the i^{th} node and a compute task represented by the j^{th} node, Analysis(i→j) represents a theoretical data transmission amount value between the compute task represented by the i^{th} node and the compute task represented by the j^{th} node, and EdgeSlack(i→j) represents a time slackness between the i^{th} node and the j^{th} node. EdgeSlack(i→j)=LST(j)-EST(i)+1-p(i), where LST(j) represents latest start execution time of the compute task represented by the j^{th} node, EST(i) represents earliest start execution time of the compute task represented by the i^{th} node, p(i) represents duration for which the compute task represented by the i^{th} node is executed, a value of EdgeSlack(i→j) ranges from 1 to lv, and lv represents a quantity of time-dependent layers of the computational graph.

S102: The task deployment device allocates a plurality of compute tasks to a plurality of compute units based on computational powers of the plurality of compute units, where a difference between a ratio of computational power loads of the plurality of compute units and a ratio of the computational powers of the plurality of compute units is equal to 0 or less than a first threshold.

In this embodiment, as shown in FIG. 2, the task deployment device may analyze a compute resource to obtain a computational power of the compute resource, where the compute resource indicates a compute unit that performs computation, and then allocate the plurality of compute tasks to the compute units from two perspectives of a computational power of a processor and a computational power required for a compute task, so that the difference between the ratio of the computational power loads of the plurality of compute units and the ratio of the computational powers of the plurality of compute units is equal to 0 or less than the first threshold, that is, the ratio of the computational power loads of the plurality of compute units is equal to or approximately equal to the ratio of the computational powers of the plurality of compute units, to achieve computational power load balance between the compute units.

Specifically, as shown in FIG. 2, first, the computational graph is partitioned by using a balanced minimum cut method, to obtain N subsets. In balanced minimum cut, sums of weights of nodes in all subsets may be equal or approximately equal, and a sum of weights of edges between nodes is the minimum. Then, as shown in FIG. 2, the subsets are aggregated to obtain subsets corresponding to each computational graph. Unbalanced minimum cut is implemented by using a method of balanced minimum cut and aggregation, to achieve the foregoing objective. S102 in this embodiment may be specifically implemented by using the following three steps S1021 to S1023.

S1021: Determine a partition quantity N for the computational graph based on computational powers of a plurality of processors.

In this step, the task deployment device performs computational power analysis on the plurality of processors, and computes a greatest common divisor of the computational powers of the processors based on the computational powers of the processors, to obtain a meta computational power of the processors. Then, the computational powers of the processors are separately partitioned by the meta computational power to obtain quantities of meta computational powers of the processors. Finally, a sum of the quantities of meta computational powers of the processors is computed to obtain the partition quantity N.

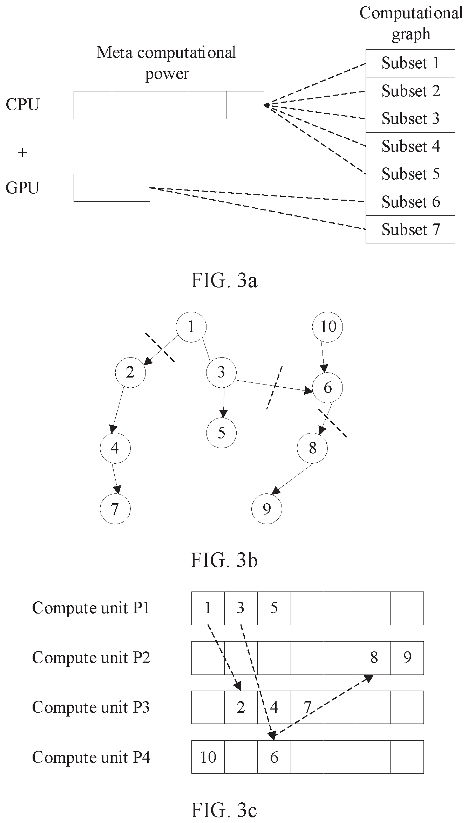

For example, the plurality of processors are a CPU and a GPU. When a computational power of the CPU is 100T FP and a computational power of the GPU is 40T FP, a greatest common divisor of 100 and 40 is 20, and a meta computational power corresponding to the CPU and the GPU is 20T FP. As shown in FIG. 3a, it may be determined that a quantity of meta computational powers of the CPU is 5, and a quantity of meta computational powers of the GPU is 2. It may be determined that a partition quantity N is 7.

In addition, there may be an error between a nominal computational power and an actual computational power of the processor. Therefore, in this step, the computational powers of the processors may be further adjusted based on time spent by the processors in running a same task. The CPU and the GPU are used as an example. When a difference between an inverse ratio of time spent by the CPU and the GPU in executing a same task and a ratio of the computational powers of the CPU and the GPU is greater than a third threshold, the computational powers of the processors may be adjusted, so that the ratio of the computational powers of the processors is close to the inverse ratio of the time, that is, the difference between the inverse ratio of the time spent by the CPU and the GPU in executing the same task and the ratio of the computational powers of the CPU and the GPU is equal to or close to the third threshold.

S1022: Partition the computational graph into N subsets based on N, where each of the N subsets includes one or more of the plurality of compute tasks, a difference between computational powers required for any two of the N subsets is equal to 0 or less than a second threshold.

In this step, balanced minimum cut is performed on the computational graph based on N with an objective of minimizing a data transmission amount of a subset, to partition the computational graph into the N subsets, so that the computational powers required for the any two of the N subsets are equal or approximately equal, that is, a difference between the computational powers required for the any two subsets is equal to 0 or less than the second threshold. In other words, in this embodiment, the computational graph is equally partitioned based on a computational power of the computational graph, and the equal-partition quantity is determined based on the computational powers of the processors. The data transmission amount of the subset is a sum of data transmission amounts of compute tasks in the subset, and the computational power required for the subset is a sum of computational powers required for the compute tasks in the subset. Performing partition with the objective of minimizing the data transmission amount of the subset can reduce the data transmission amount between compute units.

S1023: Allocate the N subsets to the plurality of processors.

In this step, as shown in FIG. 2, the subsets are aggregated based on the ratio of the computational powers of the plurality of processors, and the N subsets are allocated to the plurality of processors, so that the difference between the ratio of the computational power loads of the plurality of processors and the ratio of the computational powers of the plurality of processors is equal to 0 or less than the first threshold. Because computational powers required for all subsets are equal or approximately equal, partition is performed based on the ratio of the computational powers of the processors, to ensure that the ratio of the computational power loads of the processors and a ratio of operators are equal or approximately equal, so that the computational power loads of the processors match the computational powers of the processors.

The CPU and the GPU are used as an example. A ratio of the computational powers of the CPU and the GPU is 5:2 (obtained by simplifying 100:40), and N is 7. As shown in FIG. 3a, the computational graph is partitioned to obtain seven subsets. Therefore, five subsets in the seven subsets may be allocated to the CPU and remaining two subsets are allocated to the GPU according to 5:2. Because computational powers required for all of the seven subsets are equal or approximately equal, and finally, the ratio of the computational power loads and the ratio of the computational powers of the CPU and the GPU are also equal or approximately equal, the computational power loads of the CPU and the GPU match the computational powers of the CPU and the GPU.

In this embodiment, after a deployment result is obtained, a dependency relationship between compute tasks to be executed by the compute units may be pre-scheduled, to obtain a scheduling sequence of the compute tasks to be executed by the compute units.

A computational graph shown in FIG. 3b is used as an example, and includes compute tasks 1 to 10. When the method shown in FIG. 1 is used, compute tasks 1, 3, and 5 are allocated to a compute unit P1, compute tasks 2, 4, and 7 are allocated to a compute unit P3, compute tasks 8 and 9 are allocated to a compute unit P2, and compute tasks 10 and 6 are allocated to a compute unit P4. Based on a dependency relationship between the compute tasks shown in FIG. 3b, an execution sequence of P1 is the task 1, the task 3, and the task 5, an execution sequence of P2 is the task 8 and the task 9, an execution sequence of P3 is the task 2, the task 4, and the task 7, and an execution sequence of P4 is the task 10 and the task 6.

A scheduling sequence of the compute units P1, P2, P3, and P4 may be determined through pre-scheduling. As shown in FIG. 3c, that is, P1 is scheduled to execute the task 1 and P4 is scheduled to execute the task 10 in parallel. After the task 1 executed by P1 ends, P1 is scheduled to execute the task 3 and P2 is scheduled to execute the task 2. After the task 3 executed by P1 ends and the task 10 executed by P4 ends, P4 is scheduled to execute the task 6. After the task 6 executed by P4 ends, P2 is scheduled to execute the task 8. After the task 3 executed by P1 ends, P1 is scheduled to execute the task 5. After the task 8 executed by P2 ends, P2 is scheduled to execute the task 9.

In some application scenarios, the computational graph may include a compute task having strong affinity with each processor. If a compute task is suitable only for being executed by a specific processor, the compute task is a compute task having strong affinity with the processor. Therefore, before the computational graph is partitioned, these predetermined target compute tasks having strong affinity may be removed, that is, these target compute tasks do not participate in graph partition and task deployment.

As described above, according to different levels in the compute system, the compute unit may be a compute device, a processor unit, a processor, or a core in the processor. Therefore, based on the method embodiment shown in FIG. 1, an embodiment of this application further provides a hierarchical deployment method. For example, a compute device is a server. To be specific, a plurality of compute tasks in an application scenario are first deployed on various servers, then a plurality of compute tasks corresponding to a server are deployed on various processors in the server, and finally a plurality of compute tasks corresponding to a processor are deployed on various cores in the processor.

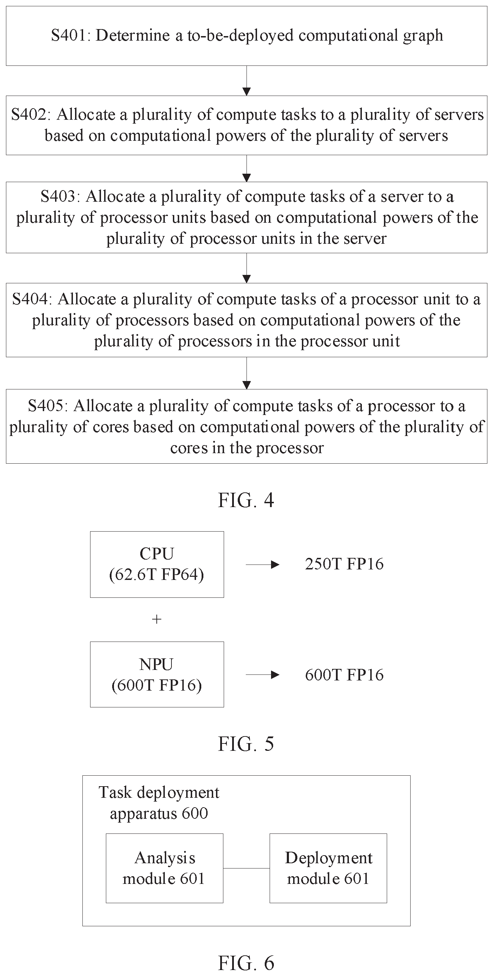

FIG. 4 is a flowchart of a hierarchical deployment method according to an embodiment of this application. The method may be performed by a task deployment device. The task deployment device may be any compute device on which deployment needs to be performed, for example, a server or a smartphone on which deployment needs to be performed. As shown in FIG. 4, the method may include S401 to S405.

S401: The task deployment device determines a to-be-deployed computational graph.

In this embodiment, for a specific process of S401, refer to the descriptions of S101 in the method embodiment shown in FIG. 1. Details are not described herein again.

S402: Allocate a plurality of compute tasks to a plurality of servers based on computational powers of the plurality of servers. A difference between a ratio of computational power loads of the plurality of servers and a ratio of the computational powers of the plurality of servers is equal to 0 or less than a first threshold.

S403: Allocate a plurality of compute tasks of a server to a plurality of processor units based on computational powers of the plurality of processor units in the server. A difference between a ratio of computational power loads of the plurality of processor units and a ratio of the computational powers of the plurality of processor units is equal to 0 or less than the first threshold.

S404: Allocate a plurality of compute tasks of a processor unit to a plurality of processors based on computational powers of the plurality of processors in the processor unit. A difference between a ratio of computational power loads of the plurality of processors and a ratio of the computational powers of the plurality of processors is equal to 0 or less than the first threshold.

S405: Allocate a plurality of compute tasks of a processor to a plurality of cores based on computational powers of the plurality of cores in the processor. A difference between a ratio of computational power loads of the plurality of cores and a ratio of the computational powers of the plurality of cores is equal to 0 or less than the first threshold.

In this embodiment, for specific processes of S402 to S405, refer to the descriptions of S102 in the method embodiment shown in FIG. 1. Details are not described herein again.

It should be noted that, if deployment needs to be performed on only one compute device, for example, one server or one mobile phone, S402 is not performed, and execution starts from S403. If the compute device includes only one processor, S403 and S404 are not performed, and S405 is directly performed. If one processor unit of the compute device includes only one processor, for deployment of the processor unit, S404 is not performed, and S405 is directly performed. If one processor of the compute device includes only one core, for deployment of the processor, S405 is not performed.

In an embodiment, the methods shown in FIG. 1 and FIG. 4 may be applied to a computational graph engine (Graph Engine, GE), and the GE runs in the task deployment device. By using the method in FIG. 1 or FIG. 4, the GE can significantly improve efficiency of a compute system with hybrid computational powers in a scenario of executing artificial intelligence (artificial intelligence, AI) model training. The compute system includes eight same CPU chips and eight same NPU chips. As shown in FIG. 5, a computational power of each CPU is about 62.6T FP64, and a computational power of each NPU is about 600T FP16. The computational power of the CPU is converted into FP16, which may be equivalent to a computational power of 250T FP16. Therefore, it can be learned that a "meta computational power" is 50T FP16. Therefore, it can be learned that a single CPU has 5 meta computational powers, and a single NPU has 12 meta computational powers. In an artificial intelligence (artificial intelligence, AI) training scenario, a computational graph of a service is partitioned based on a total quantity of meta computational powers, and subsets are aggregated. After testing, efficiency of executing the computational graph of the service by the compute system can be significantly improved.

Based on the method embodiments shown in FIG. 1 and FIG. 4, an embodiment of this application further provides a task deployment apparatus. The task deployment apparatus is configured to perform the steps in the method embodiment shown in FIG. 2 or FIG. 4.

FIG. 6 is a diagram of a structure of a task deployment apparatus 600 according to an embodiment of this application. As shown in FIG. 6, the method may include an analysis module 601 and a deployment module 602. The analysis module 601 and the deployment module 602 may be a software program or a hardware device. When the analysis module 601 and the deployment module 602 are software, they may be configured in different hardware devices, or may be configured in different hardware devices.

The analysis module 601 is configured to determine a to-be-deployed computational graph. In a process of determining the computational graph, weights of each node and each edge in the computational graph are determined.

The deployment module 602 is configured to allocate a plurality of compute tasks to a plurality of compute units based on computational powers of the plurality of compute units corresponding to the computational graph. During execution of the method embodiment shown in FIG. 4, the deployment module 602 performs a hierarchical deployment operation a plurality of times to implement hierarchical deployment, to balance computational power loads of compute units with different computational powers at a finer granularity, so that the computational power loads match the computational powers of the compute units.

It should be noted that, when the task deployment apparatus 600 provided in the embodiment shown in FIG. 6 performs the task deployment method, partition into the foregoing functional modules is merely used as an example for description. During actual application, the foregoing functions may be allocated to different functional modules for implementation based on a requirement. In other words, a device is partitioned into different functional modules in terms of an inner structure, to implement all or some of the functions described above. In addition, the compute device provided in the foregoing embodiment and the task deployment method embodiment shown in FIG. 1 or FIG. 4 pertain to a same concept. For a specific implementation process of the compute device, refer to the method embodiment. Details are not described herein again.

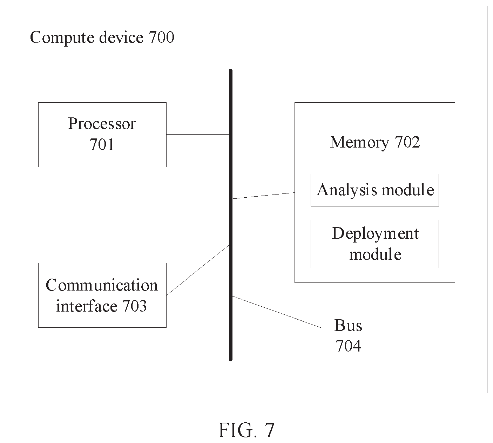

FIG. 7 is a diagram of a hardware structure of a compute device 700 according to an embodiment of this application.

The compute device 700 may include the foregoing task deployment device. Refer to FIG. 7. The compute device 700 includes a processor 701, a memory 702, a communication interface 703, and a bus 704. The processor 701, the memory 702, and the communication interface 703 are connected to each other through the bus 704. The processor 701, the memory 702, and the communication interface 703 may alternatively be connected in a connection manner other than the bus 704.

The processor 701 may be a general-purpose processor, and the general-purpose processor may be a processor that performs a specific step and/or operation by reading and executing content stored in a memory (for example, the memory 702). For example, the general-purpose processor may be a central processing unit (central processing unit, CPU). The processor 701 may include at least one circuit, to perform all or some steps of the task deployment method provided in the embodiment shown in FIG. 1 or FIG. 4. The processor 701 may include one or more cores.

The memory 702 may be various types of storage media, for example, a random access memory (random access memory, RAM), a read-only memory (read-only memory, ROM), a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a hard disk drive. As shown in FIG. 7, the memory 702 may be specifically configured to store program code corresponding to an analysis module and a deployment module. When the processor 701 runs the program code, the foregoing task deployment method is implemented.

The communication interface 703 includes an interface for implementing interconnection between components in the compute device 700, for example, an input/output (input/output, I/O) interface, a physical interface, and a logical interface; and an interface for implementing interconnection between the compute device 700 and another device (for example, another compute device or user equipment). The physical interface may be an Ethernet interface, an optical fiber interface, an ATM interface, or the like.

The bus 704 may be any type of communication bus, for example, a system bus, configured to implement interconnection between the processor 701, the memory 702, and the communication interface 703.

The foregoing components may be separately disposed on chips independent of each other, or at least some or all of the components may be disposed on a same chip. Whether the components are separately disposed on different chips or integrated and disposed on one or more chips usually depends on a requirement of a product design. This embodiment of this application imposes no limitation on specific implementations of the foregoing components.

The compute device 700 shown in FIG. 7 is merely an example. In an implementation process, the compute device 700 may further include other components, which are not listed one by one in this specification.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

It may be understood that various numbers in embodiments of this application are merely used for differentiation for ease of description, and are not used to limit the scope of embodiments of this application. It should be understood that, in embodiments of this application, sequence numbers of the foregoing processes do not mean an execution sequence. The execution sequence of the processes should be determined based on functions and internal logic of the processes, and should not be construed as any limitation on implementation processes of embodiments of this application.

In the foregoing specific implementations, the objectives, technical solutions, and beneficial effects of this application are further described in detail. It should be understood that the foregoing descriptions are merely specific implementations of the present invention, but are not intended to limit the protection scope of this application. Any modification, equivalent replacement, improvement, or the like made based on the technical solutions of this application shall fall within the protection scope of this application.

## Claims

1. A task deployment method, wherein the method comprises:
determining a to-be-deployed computational graph, wherein the computational graph comprises a plurality of compute tasks; and
allocating the plurality of compute tasks to a plurality of compute units based on computational powers of the plurality of compute units corresponding to the computational graph, wherein computational powers of at least two of the plurality of compute units are different, a difference between a ratio of computational power loads of the plurality of compute units and a ratio of the computational powers of the plurality of compute units is equal to 0 or less than a first threshold, and a computational power load of each compute unit is determined based on a sum of computational powers required for compute tasks corresponding to the compute unit.

2. The method according to claim 1, wherein the allocating the plurality of compute tasks to the plurality of compute units based on the computational powers of the plurality of compute units comprises:
determining a partition quantity N for the computational graph based on the computational powers of the plurality of compute units;
partitioning the computational graph into N subsets based on N, wherein each of the N subsets comprises one or more of the plurality of compute tasks, a difference between computational powers required for any two of the N subsets is equal to 0 or less than a second threshold, and a computational power required for each subset is a sum of computational powers required for compute tasks in the subset; and
allocating the N subsets to the plurality of compute units.

3. The method according to claim 2, wherein the determining the partition quantity N for the computational graph based on the computational powers of the plurality of compute units comprises:
determining a meta computational power based on a common divisor of the computational powers of the plurality of compute units, wherein the meta computational power represents a unit computational power of the plurality of compute units;
computing quotients of the computational powers of the plurality of compute units and the meta computational power to obtain quantities of meta computational powers of the plurality of compute units; and
computing a sum of the quantities of meta computational powers of the plurality of compute units to obtain N.

4. The method according to claim 3, wherein before the determining the meta computational powers based on the common divisor of the computational powers of the plurality of compute units, the method further comprises:
updating the computational powers of the plurality of compute units based on time for executing a same compute task by the plurality of compute units.

5. The method according to any one of claims 2 to 4, wherein the partitioning the computational graph into the N subsets based on N comprises:
partitioning the computational graph with an objective of minimizing a data transmission amount of a subset, to obtain the N subsets, wherein the data transmission amount of the subset is a sum of data transmission amounts of compute tasks in the subset.

6. The method according to any one of claims 1 to 5, wherein before the allocating the plurality of compute tasks to the plurality of compute units based on the computational powers of the plurality of compute units, the method further comprises:
removing a target compute task from the plurality of compute tasks, wherein the target compute task comprises a predetermined task to be executed by each compute unit.

7. The method according to any one of claims 1 to 6, wherein the compute unit comprises a server, a processor in the server, or a core in the processor.

8. A task deployment apparatus, wherein the apparatus comprises:
an analysis module, configured to determine a to-be-deployed computational graph, wherein the computational graph comprises a plurality of compute tasks; and
a deployment module, configured to allocate the plurality of compute tasks to a plurality of compute units based on computational powers of the plurality of compute units corresponding to the computational graph, wherein computational powers of at least two of the plurality of compute units are different, a difference between a ratio of computational power loads of the plurality of compute units and a ratio of the computational powers of the plurality of compute units is equal to 0 or less than a first threshold, and a computational power load of each compute unit is determined based on a sum of computational powers required for compute tasks corresponding to the compute unit.

9. The apparatus according to claim 8, wherein the deployment module is specifically configured to:
determine a partition quantity N for the computational graph based on the computational powers of the plurality of compute units;
partition the computational graph into N subsets based on N, wherein each of the N subsets comprises one or more of the plurality of compute tasks, a difference between computational powers required for any two of the N subsets is equal to 0 or less than a second threshold, and a computational power required for each subset is a sum of computational powers required for compute tasks in the subset; and
allocate the N subsets to the plurality of compute units.

10. The apparatus according to claim 9, wherein the deployment module is specifically configured to:
determine a meta computational power based on a common divisor of the computational powers of the plurality of compute units, wherein the meta computational power represents a unit computational power of the plurality of compute units;
compute quotients of the computational powers of the plurality of compute units and the meta computational power to obtain quantities of meta computational powers of the plurality of compute units; and
compute a sum of the quantities of meta computational powers of the plurality of compute units to obtain N.

11. The apparatus according to claim 10, wherein the deployment module is specifically configured to: before determining the meta computational power based on the common divisor of the computational powers of the plurality of compute units, update the computational powers of the plurality of compute units based on time for executing a same compute task by the plurality of compute units.

12. The apparatus according to any one of claims 9 to 11, wherein the deployment module is specifically configured to:
partition the computational graph with an objective of minimizing a data transmission amount of a subset, to obtain the N subsets, wherein the data transmission amount of the subset is a sum of data transmission amounts of compute tasks in the subset.

13. The apparatus according to any one of claims 8 to 12, wherein the deployment module is specifically configured to: before allocating the plurality of compute tasks to the plurality of compute units based on the computational powers of the plurality of compute units, remove a target compute task from the plurality of compute tasks, wherein the target compute task comprises a predetermined task to be executed by each compute unit.

14. The apparatus according to any one of claims 8 to 13, wherein the compute unit comprises a server, a processor unit in the server, a processor in the server, or a core in the processor.

15. A compute device, wherein the compute device comprises a processor and a memory, and the processor is configured to execute a computer program stored in the memory to implement the method according to any one of claims 1 to 7.

16. A computer-readable storage medium, comprising instructions, wherein when the instructions are run on a computer, the computer is enabled to perform the method according to any one of claims 1 to 7.
